# EUROPÄISCHE PATENTSCHRIFT

(11) **EP 1 263 812 B1**
(45) Veröffentlichungstag und Bekanntmachung des Hinweises auf die Patenterteilung: **14.07.2004**
(21) Anmeldenummer: 01929431.3
(22) Anmeldetag: 13.03.2001
(51) Int. Cl.: C08F 10/02, C08F 4/38, C08F 2/00, C08J 5/18

(54) **VERFAHREN ZUR HERSTELLUNG VON POLYETHYLEN**
METHOD FOR THE PRODUCTION OF POLYETHYLENE
PROCEDE DE PRODUCTION DE POLYETHYLENE

(30) Priorität: 16.03.2000 DE 10012727
(43) Veröffentlichungstag der Anmeldung: 11.12.2002
(73) Patentinhaber: Basell Polyolefine GmbH, 50389 Wesseling (DE)
(72) Erfinder: GONIOUKH, Andrei, 67373 Dudenhofen (DE); WITTKOWSKI, Lars, 68167 Mannheim (DE); DRÖGE, Thomas, 67434 Neustadt (DE); FISCHER, Ernst, 67346 Speyer (DE); KLIMESCH, Roger, 64665 Alsbach-Hähnlein (DE); ROSENDORFER, Philipp, 67434 Neustadt (DE); KÖHLER, Gernot, 67549 Worms (DE); LITTMANN, Dieter, 55257 Budenheim (DE)
(86) Internationale Anmeldenummer: PCT/EP2001/002796
(87) Internationale Veröffentlichungsnummer: WO 2001/068723

(56) Entgegenhaltungen:
- EP-A- 0 121 755
- EP-A- 0 573 870
- WO-A-00/01740
- US-A- 4 135 044
- US-A- 4 175 169
- US-A- 5 907 022

## Beschreibung

Die vorliegende Erfindung betrifft Verfahren zur Herstellung von Ethylenhomopolymeren und -copolymeren in einem Rohrreaktor bei Temperaturen von 160°C bis 350°C und Drücken im Bereich von 500 bis 5000 bar, gegebenenfalls unter Verwendung von Molmassenreglern, dadurch gekennzeichnet, dass man als Polymerisationsinitiator ein Peroxidgemisch einsetzt, das 1 bis 50 Mol-%, mindestens eines cyclischen Peroxids der Formel I enthält, 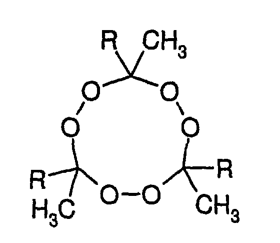 wobei die Reste R gleich oder verschieden sind und aus Alkylgruppen oder Arylgruppen ausgewählt werden, und das 50-99 Mol-% eines oder konventioneller Polymerisations initiatoren, bezogen auf die Gesamtmenge des Peroxidgemisches, enthält.

Das Hochdruckpolymerisationsverfahren ist ein bewährtes Verfahren zur Herstellung von Polyethylen mit niedriger Dichte (LDPE), das weltweit in zahlreichen Anlagen großtechnisch mit großem Erfolg durchgeführt wird. Der Start der Polymerisation wird bei der Hochdruckpolymerisation üblicherweise durch Luftsauerstoff, durch Peroxide, durch andere Radikalbildner oder durch Gemische aus diesen bewirkt. In der Praxis hat es sich als besonders vorteilhaft herausgestellt, die Polymerisationsreaktion an mehreren Stellen innerhalb des Reaktors gleichzeitig zu starten und damit die Reaktorausbeute hoch und die Produktqualität auf einem gleichmäßig hohen Niveau zu halten. Die zum Start der Polymerisation eingesetzten Radikalkettenstarter müssen hierzu dem Reaktionsmedium in geeigneter Weise zugesetzt werden.

Um die Kapazität der vorhandenen Reaktoren zu erhöhen, ist man bestrebt, möglichst hohe Umsätze zu verwirklichen. Limitierend sind jedoch Polymerisationstemperatur und Polymerisationsdruck, die je nach Produkttyp eine spezifische Obergrenze haben. Zudem kann es oberhalb von ca. 350°C zu spontanen Ethylen-Zersetzungen kommen.

Durch die Wahl des Polymerisationsinitiators lässt sich der Umsatz in gewissen Grenzen erhöhen. Gewünscht sind Polymerisationsinitiatoren, die schnell zerfallen, aber sich dennoch sicher handhaben lassen. Eine gute Methode, die Zerfallsgeschwindigkeit eines Polymerisationsinitiators im Hochdruckprozess zu prüfen, ist eine Aufnahme des Temperaturprofils. Bei der Polymerisation im Hochdruckrohrreaktor wird dazu das Temperaturprofil über die Reaktorlänge aufgetragen. Unmittelbar nach der ersten Dosierung des Initiators steigt die Temperatur aufgrund der frei werdenden Polymerisationsreaktions-Enthalpie steil an, um danach wieder abzusinken. Nach Absinken der Temperatur um ca. 20 bis 100°C wird erneut Initiator dosiert, die Temperatur steigt wiederum steil an und sinkt danach wieder ab. Je nach Anzahl der Reaktionzonen wird dieser Vorgang entsprechend wiederholt. Entscheidendes Anzeichen für das vollständige Abreagieren eines Peroxids ist dabei die sogenannte Abkühlkurve, die bei vollständigem Zerfall steiler verläuft als in den Fällen, in denen Anteile des Peroxids auch noch nach Durchlaufen des Temperaturmaximum in der Reaktionsmischung verbleiben.

Dabei wird die Reaktion im Allgemeinen so geführt, dass zunächst am Startpunkt, das heißt zu Beginn des Reaktors, mehrere Peroxide dosiert werden, von denen mindestens eines bei vergleichsweise niedriger Temperatur zerfällt.

EP-B 0 813 550 lehrt, dass sich cyclische Peroxoverbindungen der allgemeinen Formeln P¹ bis P³ besonders gut eignen, um Styrol oder Acrylate zu polymerisieren. Weiterhin geht daraus hervor, daß man diese auch zur Polymerisation von Ethylen verwenden kann. Die Reste R¹ bis R⁶ sind dabei unabhängig voneinander Wasserstoff, C₁-C₂₀ Alkyl, C₃-C₂₀ Cycloalkyl, C₆-C₂₀ Aryl, C₇-C₂₀ Aralkyl und C₇-C₂₀ Alkaryl, wobei die Reste R¹ bis R⁶ auch Substituenten wie Alkyl, Aryl Alkoxy, Aryloxy, Hydroxy, Carboxyl, Hydroxyl, Halogen, Nitril oder Amido tragen können.

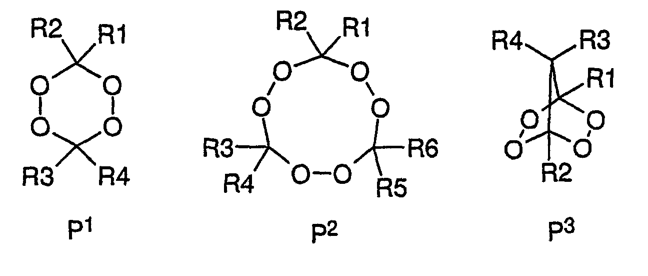

Es hat sich gezeigt, dass der Umsatz bei der Verwendung der wichtigsten konventionellen Polymerisationsinitiatoren immer noch zu gering ist. Als die wichtigsten konventionellen Polymerisationsinitiator sind Dibenzoylperoxid, Di-tert.-butylperoxid (DTBP), tert.-Butylperpivalat ("TBPP") und tert.-Butylperisononanoat ("TBPIN") zu nennen. Bei zu geringem Umsatz wird die Wirtschaftlichkeit des Hochdruckprozesses beeinträchtigt. Auch die Umsätze bei Verwendung der Peroxide der allgemeinen Formeln P¹ bis P³ sind für die meisten dieser Verbindungen noch zu gering oder die Menge an Initiator um guten Umsatz zu erzielen ist zu hoch.

Deshalb bestand die Aufgabe, ein Verfahren bereitzustellen, durch das der Umsatz bei der Hochdruckpolymerisation von Ethylen weiter erhöht wird oder der Verbrauch an Initiator vermindert wird.

Es wurde nun ein Verfahren zur Herstellung von Ethylenhomopolymeren und -copolymeren in einem Rohrreaktor bei Temperaturen von 160°C bis 350°C und Drücken im Bereich von 500 bis 5000 bar, gegebenenfalls unter Verwendung von Molmassenreglern gefunden, dadurch gekennzeichnet, dass man als Polymerisationsinitiator ein Peroxidgemisch einsetzt, das 1 bis 50 Mol-%, bezogen auf die Gesamtmenge des Peroxidgemisches, mindestens eines cyclischen Peroxids der Formel I enthält, 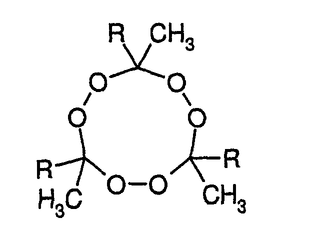 wobei die Reste R gleich oder verschieden sind und aus Alkylgruppen oder Arylgruppen ausgewählt werden. Bevorzugt ist R ein C₁-C₂₀ lineares, verzweigtes oder cyclisches Alkyl oder ein C₆-C₁₈-Aryl. Insbesondere wird R ausgewählt aus
C₁-C₈-Alkyl wie Methyl, Ethyl, n-Propyl, iso-Propyl, n-Butyl, sec.-Butyl, iso-Butyl, tert.-Butyl, n-Pentyl, sec.-Pentyl, iso-Pentyl, n-Hexyl, Cyclohexyl, n-Heptyl, n-Octyl, bevorzugt lineares C₁-C₆-Alkyl wie Methyl, Ethyl, n-Propyl, n-Butyl, n-Pentyl, n-Hexyl, iso-Hexyl, besonders bevorzugt lineares C₁-C₄-Alkyl wie Methyl, Ethyl, n-Propyl oder n-Butyl, ganz besonders bevorzugt sind alle drei Reste Ethyl; und
C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Die Darstellung derartiger trimerer Ketonperoxide gelingt durch Kondensation der entsprechenden Ketone mit Wasserstoffperoxid in Gegenwart starker Mineralsäuren und ist in der Literatur beschrieben (beispielsweise R. Griegee, in *Methoden* der *Organischen* Chemie (Houben-Weyl), Bd. 8, S. 46, Georg-Thieme-Verlag Stuttgart 1952 oder in EP-A 0 813 550).

Die als Polymerisationsinitiator erfindungsgemäß verwendeten Mischungen enthalten
- A)1 bis 50 Mol-% eines oder mehrerer trimerer Ketonperoxide als Hochzerfaller, bevorzugt 2 bis 50 Mol-% und besonders bevorzugt 3 bis 30 Mol-%, und
- B) 50 bis 99 Mol-% eines oder mehrerer konventioneller Polymerisationsinitiatoren, bevorzugt 50 bis 98 Mol-% und besonders bevorzugt 70 bis 97 Mol%,
jeweils bezogen auf die Gesamtmenge des Peroxidgemisches.

Die Polymerisation wird in jeder Reaktionszone durch Zugabe von radikalisch zerfallenden Initiatoren gestartet, wobei in mindestens einer Reaktionzone die erfindungsgemäßen Peroxidmischungen verwendet werden. Bevorzugt werden die erfindungsgemäßen Peroxidmischungen in mehreren oder jeder Reaktionszone verwendet. Als Komponente B) können beliebige Polymerisationsinitiatoren, wie z.B. radikalisch zerfallende, vorzugsweise organische, Peroxide, Luft oder Sauerstoff eingesetzt werden.

Dabei ist B) bevorzugt ein oder mehrere konventionelle Peroxide. Die erfindungsgemäßen Peroxidgemische werden so festgelegt, dass sie einerseits mindestens ein sogenanntes hochzerfallendes Peroxid, das auch "Hochzerfaller" genannt wird, weil es erst bei relativ hohen Temperaturen zerfällt und andererseits mindestens ein sogenanntes mittelzerfallendes Peroxid enthalten, das auch als "Mittelzerfaller" bezeichnet wird, weil es bei mittelhohen Temperaturen zerfällt.

Die Unterscheidung zwischen Hochzerfallern und Mittelzerfallern erfolgt mit Hilfe der Temperaturen, bei denen die Halbwertszeiten t_{½} für den Zerfall 10, 1 oder 0,1 Stunden bestimmt werden, am gebräuchlichsten wird die Halbwertszeit bei 0,1 Stunden angegeben.

Niederzerfaller haben eine Halbwertszeit von 0,1 Stunden bei Temperaturen von unter 100.

Mittelzerfaller haben eine Halbwertszeit von 0,1 Stunden bei Temperaturen von 100 bis 140°C.

Hochzerfaller haben eine Halbwertszeit von 0,1 Stunden bei Temperaturen über 140°C.

Peroxide sind in großer Auswahl kommerziell erhältlich, beispielsweise die Trigonox® oder Perkadox®-Marken der Akzo Nobel.

Beispiele für kommerziell erhältliche Niederzerfaller sind:

Di(2-ethylhexyl)peroxydicarbonat, tert.-Amylperoxyneodecanoat, tert.-Butylperoxyneodecanoat, tert.Butylperoxypivalat, tert.-Amylperoxypivalat.

Beispiele für kommerziell erhältliche Mittelzerfaller sind:

Didecanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.Butylperoxydiethylacetat, tert.-Butylperoxydiethylisobutyrat, 1,4-Di(tert.-butylperoxycarbo)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperox)butan oder tert.-Butylperoxacetat.

Beispiele für konventionelle kommerziell erhältliche Hochzerfaller sind:
tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylmonohydroperoxid, Cumolhydroperoxid oder tert.-Butylhydroperoxid.

Die trimeren Ketonperoxide der allgemeinen Formel I sind als Hochzerfaller einzuordnen.

Die Halbwertszeiten von Peroxiden werden üblicherweise nach einer allgemein verwendeten Labormethode bestimmt:

Zunächst werden mehrere Ampullen oder Reagenzgläser mit einer verdünnten Lösung der Konzentration c₀ mit weniger als 0,2 mol/l, bevorzugt weniger als 0,1 mol/l des zu untersuchenden Peroxids hergestellt, wobei als Lösemittel ein inertes, d.h. ein nicht mit Peroxiden reagierendes Lösemittel gewählt wird; bevorzugt sind Benzol, Toluol oder Chlorbenz

Diese Ampullen werden bei einer definierten Temperatur thermostatisiert. In definierten Zeitabständen, z.B. 1, 2, 3, 4, 6, 8 Stunden wird je eine Ampulle entnommen, schnell abgekühlt und dann auf den Restperoxidgehalt cₜ untersucht. Diese Untersuchung erfolgt vorzugsweise titrimetrisch. Die Auswertung erfolgt graphisch. Trägt man die relative Konzentration logarithmisch gegen die Reaktionszeit auf, so lässt sich die Halbwertszeit bei cₜ/c₀ = 0,5 an der Ordinate ablesen. Zur Bestimmung der Temperaturabhängigkeit wird diese Messung bei verschiedenen Temperaturen wiederholt.

Bevorzugt sind die verwendeten Peroxide B) ein oder mehrere Mittelzerfaller oder Mischungen aus ein oder mehreren Mittelzerfallern und ein oder mehreren Niederzerfallern.

Besonders bevorzugt werden als erfindungsgemäße Polymerisationsinitiatoren Peroxidgemische, bestehend aus
- A') 1 bis 50 Mol-% eines oder mehrerer trimerer Ketonperoxide als Hochzerfaller, bevorzugt 2 bis 40 Mol-% und besonders bevorzugt 3 bis 30 Mol-%;
- B') 20 bis 99 Mol.-% eines oder mehrerer konventioneller Peroxide als Mittelzerfaller, bevorzugt 30 bis 98 Mol-% und besonders bevorzugt 40 bis 97 Mol-%.
- C') 0 bis 79 Mol.-% eines oder mehrerer konventioneller Peroxide als Niedrigzerfaller, bevorzugt 0 bis 68 Mol-% und besonders bevorzugt 0 bis 57 Mol-%,
wobei A'), B') und C') 100% ergeben,
verwendet.

Besonders bevorzugt wird in der ersten Reaktionszone ein Initiatorgemisch aus 1 bis 10 Mol-% A'), 40 bis 60 Mol-% B') und 40 bis 60 Mol-% C'), wobei A'), B') und C') 100% ergeben. In den folgenden Reaktionzonen wird bevorzugt ein Gemisch aus 5 bis 40 Mol-% A') und 60 bis 95 Mol-% B') verwendet.

Die Dosierung der im reinen Zustand äußerst stoß- und schlagempfindlichen Peroxide erfolgt vorteilhaft als Lösung in aliphatischen Kohlenwasserstoffen, wobei Octan und Isododekan als Lösemittel beispielhaft zu nennen sind. Die Lösungen enthalten die Peroxidmischungen in Anteilen von 5 bis 60 Gew.-%, bevorzugt von 15 bis 40 Gew.-%. Die erfindungsgemäßen Polymerisationsinitiatorgemische werden erfindungsgemäß in Mengen im Bereich von 0,5 bis 100 mol/t erzeugtes Polyethylen vorzugsweise von 1 bis 10 mol/t und besonders bevorzugt von 1 bis 5 mol/t erzeugtes Polyethylen, zugeleitet.

Die Polymerisation wird bei Drücken von 500 bis 5000 bar durchgeführt, wobei Drücke von 1500 und 3500 bar bevorzugt und Drücke von 2000 bis 3300 bar besonders bevorzugt sind. Die Reaktionstemperaturen liegen oberhalb 40°C. Die Reaktionstemperatur beträgt 150°C bis 350°C, bevorzugt sind 250°C bis 330°C und ganz besonders bevorzugt 270°C bis 320°C.

Das erfindungsgemäße Verfahren läßt sich sowohl für die Homopolymerisation als auch für die Copolymerisation von Ethylen mit anderen Monomeren verwenden, unter der Voraussetzung, daß diese Monomeren unter Hochdruck mit Ethylen radikalisch copolymerisieren. Beispiele geeigneter copolymerisierbarer Monomere sind α , β-ethylenisch ungesättigte C₃- bis C₈-Carbonsäuren, insbesondere Maleinsäure, Fumarsäure, Itaconsäure, Acrylsäure, Methacrylsäure und Crotonsäure, α , β-ethylenisch ungesättigte C₃- bis C₁₅-Carbonsäureester oder -anhydride, insbesondere Methacrylsäuremethylester, Methacrylsäureethylester, Methacrylsäure-n-butylester oder Methacrylsäure-tert.-butylester, Acrylsäuremethylester, Acrylsäureethylester, Acrylsäure-n-butylester, Acrylsäure-2-ethylhexylester, Acrylsäure-tert.-butylester, Methacrylsäureanhydrid, Maleinsäureanhydrid oder Itaconsäureanhydrid und α-Olefine, wie Propen, 1-Buten, 1-Penten, 1-Hexen, 1-Octen oder 1-Decen. Außerdem können Vinylcarboxylate, besonders bevorzugt Vinylacetat als Comonomer verwendet werden. Der Anteil an Comonomer bzw. Comonomeren im Reaktionsgemisch beträgt 1 bis 45 Gew.-%, bevorzugt 3 bis 35 Gew.-% bezogen auf die Menge an Ethylenmonomer.

Zusätzlich kann das strömende Reaktionsgemisch erfindungsgemäß Polyethylen in einer Menge im Bereich von 0 bis 40 Gew.-%, bezogen auf das Gesamtgewicht der Monomere, enthalten, vorzugsweise von 1 bis 30 Gew.-%.

Bei dem erfindungsgemäßen Verfahren kann die Molmasse der darzustellenden Polymerisate wie üblich durch Zugabe von Molekulargewichtsreglern kontrolliert werden. Beispiele geeigneter Regler sind aliphatische und olefinische Kohlenwasserstoffe, wie z.B. Pentan, Hexan, Cyclohexan, Propen, Penten oder Hexen, Ketone, wie z.B. Aceton, Diäthylketon oder Diamylketon, Aldehyde, wie z.B. Formaldehyd oder Acetaldehyd und gesättigte aliphatische Alkohole, wie z.B. Methanol, Ethanol, Propanol oder Butanol. Besonders bevorzugt werden gesättigte aliphatische Aldehyde, insbesondere Propionaldehyd oder α-Olefine, wie Propen oder Hexen eingesetzt. Der Molekulargewichtsregler wird vorzugsweise dem Reaktionsgemisch vor dem Rohrreaktor zudosiert. Er kann auch zusammen mit dem Polymerisationsinitiator an den unterschiedlichen Stellen entlang des Rohrreaktors zudosiert werden.

In einer bevorzugten Ausführungsform wird entlang des Rohrreaktors an 2 bis 6 Stellen, besonders bevorzugt an 3 bis 5 Stellen Polymerisationsinitiator zudosiert, so daß 2 bis 6 Reaktionszonen entstehen. Bevorzugt wird hierbei die gesamte Menge an Monomer und gewünschtenfalls Comonomer am Reaktoreingang zudosiert.

In einem anderen bevorzugten Verfahren besitzt der Rohrreaktor mindestens zwei Reaktionszonen, in die jeweils zusätzliches kaltes oder vorgewärmtes Monomer und/oder kaltes oder vorgewärmtes Comonomer als Frischgasstrom vor Beginn jeder Reaktionszone zudosiert wird. Bevorzugt sind mindestens drei aufeinanderfolgende Reaktionszonen, wobei die Polymerisation in jeder Zone durch Zugabe der entsprechenden Initiatoren wieder neu gestartet werden muß. Für die Durchführung eignen sich u.a. Rohrreaktoren, welche mit einer Reihe von Einlaßstellen für den Initiator sowie für die Zufuhr weiterer Monomermengen versehen sind.

Auch Reaktoren, wie sie in US-PSen 4,135,044 und 4,175,169 beschrieben sind, können mit dem erfindungsgemäßen Verfahren betrieben werden. Hierbei hat der Rohrreaktor in jeder Reaktionzone, von der Initiatordosierung bis zum Temperaturmaximum einen vergleichsweise geringeren Rohrdurchmesser bezogen auf den vergrößerten Rohrdurchmesser in der daran anschließenden Kühlzone (vom Temperaturmaximum bis zur nächsten Initiatordosierung). Dadurch kann ein hoher Umsatz bei relativ geringem Druckabfall über die Länge des Reaktors erreicht werden.

Der Rohrreaktor kann üblicherweise zur Abfuhr der Reaktionswärme mit einem gekühlten Mantel versehen sein. Bevorzugt ist hierbei ein Heißwassermantel, wobei dieser auch segmentiert sein kann.

Das Verhältnis von Länge zu Durchmesser des Rohrreaktors liegt vorzugsweise im Bereich von 10 000 bis 50 000, besonders bevorzugt 15 000 bis 35 000.

Im allgemeinen liegt die mittlere Verweilzeiten des Reaktionsgemischs im Rohrreaktor zwischen 30 und 300, insbesondere 30 und 120 Sekunden.

Nach der letzten Zudosierung des Polymerisationsinitiators wird das Reaktionsgemisch abgekühlt, um das Produkt aus dem Reaktor austragen zu können. Das Reaktionsgemisch wird durch ein geeignetes Hochdruckentspannungsventilsystem am Austrittsende des Röhrenreaktors ausgestoßen. Nach dem Austragen des Reaktionsgemischs wird das Polymerisat durch Entspannen von unverbrauchtem Ethylen und gegebenenfalls unverbrauchtem Comonomer getrennt, wonach man die Monomeren im allgemeinen in den Reaktor zurückführt.

Dieses erfindungsgemäße Verfahren kann in analoger Weise auch mit Vorschalten eines Reaktors mit Rückvermischung durchgeführt werden. Nach dem Abklingen der Polymerisation im Rückvermischer wird das Polymerisationsgemisch zusammen mit noch unverbrauchten Monomeren durch ein Hochdruckrohr, welches gegebenenfalls noch mit einem Wärmeaustauscher verbunden ist, in den Rohrreaktor eingebracht, wo das Verfahren, wie vorstehend beschrieben, weitergeführt wird. Im allgemeinen beträgt die mittlere Verweilzeit des Gemisches im Reaktor mit Rückvermischung 10 bis 100, insbesondere 10 bis 30 Sekunden, im Rohrreaktor 10 bis 200, insbesondere 10 bis 100 Sekunden.

Nach dem erfindungsgemäßen Verfahren lassen sich Ethylenhomo- und copolymere mit besonders günstigen Eigenschaften darstellen. Die Polymerisate lassen sich ferner mit dem erfindungsgemäßen Verfahren sicher und exakt reproduzierbar herstellen, ohne daß es in den Reaktoren zu einer explosionsartigen Zersetzung des Ethylens kommt. Die erfindungsgemäßen Polymerisate weisen Dichten von 918 bis 930 kg/m³, bevorzugt von 918 bis 926 kg/m³ und besonders bevorzugt von 920 bis 925 kg/m³ auf. Die Dichte kann z.B. über den Kettenregler und/oder die Comonomeren beeinflußt werden. Der Schmelzflußindex gemäß DIN 53 735 (190°C/2,16 kg) ist üblicherweise kleiner als 50 g/10 min, insbesondere kleiner 10 g/10 min und besonders bevorzugt kleiner 5 g/10 min. In der vorstehend beschriebenen Weise ist es möglich, Polymerisate mit Dichten über 918 kg/m³ bei Umsätzen von mehr als 25 % herzustellen.

Das erfindungsgemäße Verfahren ermöglicht es, die Menge an zugegebenem Radikalkettenstarter bei gleicher Menge an produziertem LDPE (Polyethylen mit niedrigen Dichten) deutlich zu reduzieren, und damit die Hochdruckpolymerisation wirtschaftlicher zu betreiben.

Ferner eignet sich das nach dem erfindungsgemäßen Verfahren hergestellten Polymerisate, insbesondere LDPE besonders gut zur Darstellung von Folien, bzw. Filmprodukten. Folien bzw. Filmprodukte, welche aus den erfindungsgemäßen Polymerisaten hergestellt werden, weisen hervorragende optische und mechanische Eigenschaften auf. Bevorzugt sind Folien mit einer Reißdehnung senkrecht zur Maschinenrichtung größer 750% und einem Dart drop impact von größer 100. Auch die Verarbeitbarkeit ist bei diesen Polymerisaten besonders günstig, weil der Druckaufbau im Extruder kurz vor der Düse geringer ist.

Außerdem hat das erfindungsgemäße Verfahren noch den Vorteil, dass ein stabiler Reaktorbetrieb bei ungewöhnlich hohen Maximaltemperaturen von bis zu 320°C aufrecht erhalten werden kann, ohne dass eine Zersetzungsneigung auftritt.

Die Vorgehensweise wird an den Beispielen erläutert.

### Beispiele und Vergleichsversuche

Die Beispiele 1-3 und Vergleichsversuche A, B, C und D wurden in einem röhrenförmigen Reaktorgefäß mit einer Länge von 560 m und einem Verhältnis von Länge zu Durchmesser von 33 000 durchgeführt. Die Polymerisationsinitiatoren wurden in aliphatischen Kohlenwasserstoffen gelöst mittels Hochdruckkolbenpumpen direkt den Einspeisestellen des Rohrreaktors zugeführt. Hierbei wurde durch die Lage der Einspeisestellen die Länge der Reaktionszonen im Reaktionsgefäß festgelegt. Das sauerstofffreie Ethylen wurde in mehreren Stufen auf den jeweiligen Reaktionsdruck komprimiert, mit einem Molmasseregler versetzt und den Einlaßstellen des Rohrreaktors zugeführt. Als Molmasseregler wurde Propionaldehyd verwendet.

Die bei der Polymerisation freiwerdende Reaktionswärme wurde der Reaktionsmischung über einen Kühlmittelkreislauf entzogen. Das resultierende Polymerisat wurde in üblicher und bekannte Weise in dem Reaktor nachgeschalteten Abscheidern von nicht umgesetztem Ethylen und anderen niedermolekularen Verbindungen abgetrennt und über einen Extruder und Granulator ausgetragen und konfektioniert. Nicht umgesetztes Ethylen wurde in mehreren Stufen gereinigt und auf die Saugseite der Verdichter zurückgeführt. Die Einzelheiten sind aus Ullmans Encyclopädie der technischen Chemie, Band 19, S.169-178 (1980) zu entnehmen.

Folgende Abkürzungen wurden verwendet:
tert.-Butyl-perpivalat: TBPP),
tert.-Butyl-perisononanoat: TBPIN,
3,6,9-Trimethyl-3,6,9-triethyl-1,4,7-triperoxonan: TPN,
Ditert.-butylperoxid: DTBP,
Methylisobutylketonperoxid: MIKP.

Die Eigenschaften der resultierenden Polymerisate wurden nach den folgenden Methoden bestimmt:
der Schmelzflußindex (Melt Flow Index, MFI) bei einer Temperatur von 190°C und einer Auflagekraft von 2,16 kp nach ISO 1133 und die Dichte nach ISO 1183.

Aus den Polymerisaten wurden in üblicher und bekannte Weise Blasfolien hergestellt (s. Ullmans Encyclopädie der technischen Chemie, Band 11, S.673 (1980)) deren anwendungstechnische Eigenschaften nach den folgenden Methoden bestimmt wurden:
die Lichtstreuung der Folie nach DIN 53 490,
der Glanz der Folie nach DIN 67 530,
die Reißdehnung der Folie nach ISO 527,
die Durchstoßfestigkeit der Folie nach DIN 53 373,
der "Dart drop impact - Wert" nach ASTM D 1709/A
Die Ausziehfähigkeit der Blasfolie wurde auf übliche und bekannte Weise während der Schlauchfolien-Extrusion beim Abziehen und Aufwickeln der Folie bestimmt. Hierbei wurde die Abzugs-Geschwindigkeit nach jeweils 20 s stufenweise um 2m/min erhöht, bis es zum Folienriß kam.

Erfindungsgemäße Beispiele 1-3 mit 3,6,9-Trimethyl-3,6,9-triethyl-1,4,7-triperoxonan (TPN)

Die erfindungsgemäße Beispiele beschreiben die Herstellung (Tabelle 1) und die Eigenschaften (Tabelle 2) der Polymeren, bzw, der daraus hergestellten Folien, die mit den in den Vergleichsbeispielen beschriebenen Polymeren direkt verglichen werden können.

Der Einlaßstelle des Reaktors wurde ein Gemisch aus tert.-Butylperpivalat (TBPP), tert.-Butyl-perisononanoat (TBPIN), 3,6,9-Trimethyl-3,6,9-triethyl-1,4,7-triperoxonane (TPN) in Isododekan gelöst zugeführt und so die Polymerisation gestartet. An der zweiten Einspeisestelle des Rohrreaktors, an welcher die Reaktionstemperatur nach dem ersten Temperaturmaximum wieder auf 250°C abgesunken war, wurde ein Gemisch aus tert.-Butyl-perisononanoat (TBPIN) und 3,6,9-Trimethyl-3,6,9-triethyl-1,4,7-triperoxonane (TPN) in Isododekan gelöst zugeführt. An der dritten Einspeisestelle des Rohrreaktors, an welcher die Reaktionstemperatur nach dem zweiten Temperaturmaximum wieder unter 250°C abgesunken war, wurde ein Gemisch aus tert.-Butyl-perisononanoat (TBPIN) und 3,6,9-Trimethyl-3,6,9-triethyl-1,4,7-triperoxonan (TPN) in Isododekan gelöst zugeführt.

Die Durchführung dieser Versuche bereiteten keine Schwierigkeiten, die Produkttypumstellung verlief schnell und reibungslos. Es kam auch nicht zu den gefürchteten explosionsartigen Zersetzungen des Reaktionsgemischs bei höheren Temperaturspitzen von 320°C bis 325°C.

### Vergleichsbeispiele A, B und C (ohne 3,6,9-Trimethyl-3,6,9-triethyl-1,2,4,5,7,8-triperoxononan (TPN))

3,2 t/h Ethylen wurden mit 1,0-3,0 l/h Propionaldehyd (abhängig von MFI-Wert) versetzt, auf 3000 bar komprimiert, in einem Vorwärmer auf 155°C erwärmt und dem Eingang des Rohrreaktors zugeführt. Das erfindungsgemäße Peroxid TPN wurde dabei durch das nicht erfindungsgemäße Peroxid DTBP der jeweiligen Mischung an jeder Einlaßstelle ersetzt.

Die Spitzenwerte der Temperatur in der 1.-, 2.- und 3.-Reaktionszonen für die Einzelversuche sind aus der Tabelle 1 zu entnehmen. Das resultierende Ethylenpolymerisat wurde in Hoch- und Niederdruckabscheidern vom Ethylen und niedermolekularen Verunreinigungen in übliche und bekannter Weise befreit, in Bunkern zwischengelagert und zu Blasfolien verarbeitet.
Die Tabelle 1 gibt auch Auskunft über den Umsatz der Reaktion, den spezifischen Verbrauch der hochzerfallenden Peroxide und den Gesamtperoxidverbrauch. Die physikalisch-chemischen Eigenschaften des Ethylenhomopolymerisats und die anwendungstechnischen Eigenschaften der hieraus hergestellten Blasfolie sind in der Tabelle 2 zusammengefaßt.

### Vergleichsbeispiel D

Dieses Beispiel wurde ähnlich den Vergleichsbeispielen A, B und C durchgeführt mit dem Unterschied, dass anstatt des hochzerfallenden Peroxids DTBP eine hochzerfallende Peroxidmischung mit dem Handelsname MIKP eingesetzt wurde. Die Ergebnisse in der Tabelle 1 zeigen, dass bei gleicher Spitzentemperatur von 303°C deutlich niedrigere Polymerdichte (0,9190 g/cm² im Vergleich mit 0,9240 g/cm² für DTBP und TPN) erreicht werden konnten. Die Produkteigenschaften wurden dadurch nicht vergleichbar.

Außerdem wurde während der MIKP-Anwendung eine Neigung zur spontanen Zersetzungen des Reaktionsgemisches registriert.

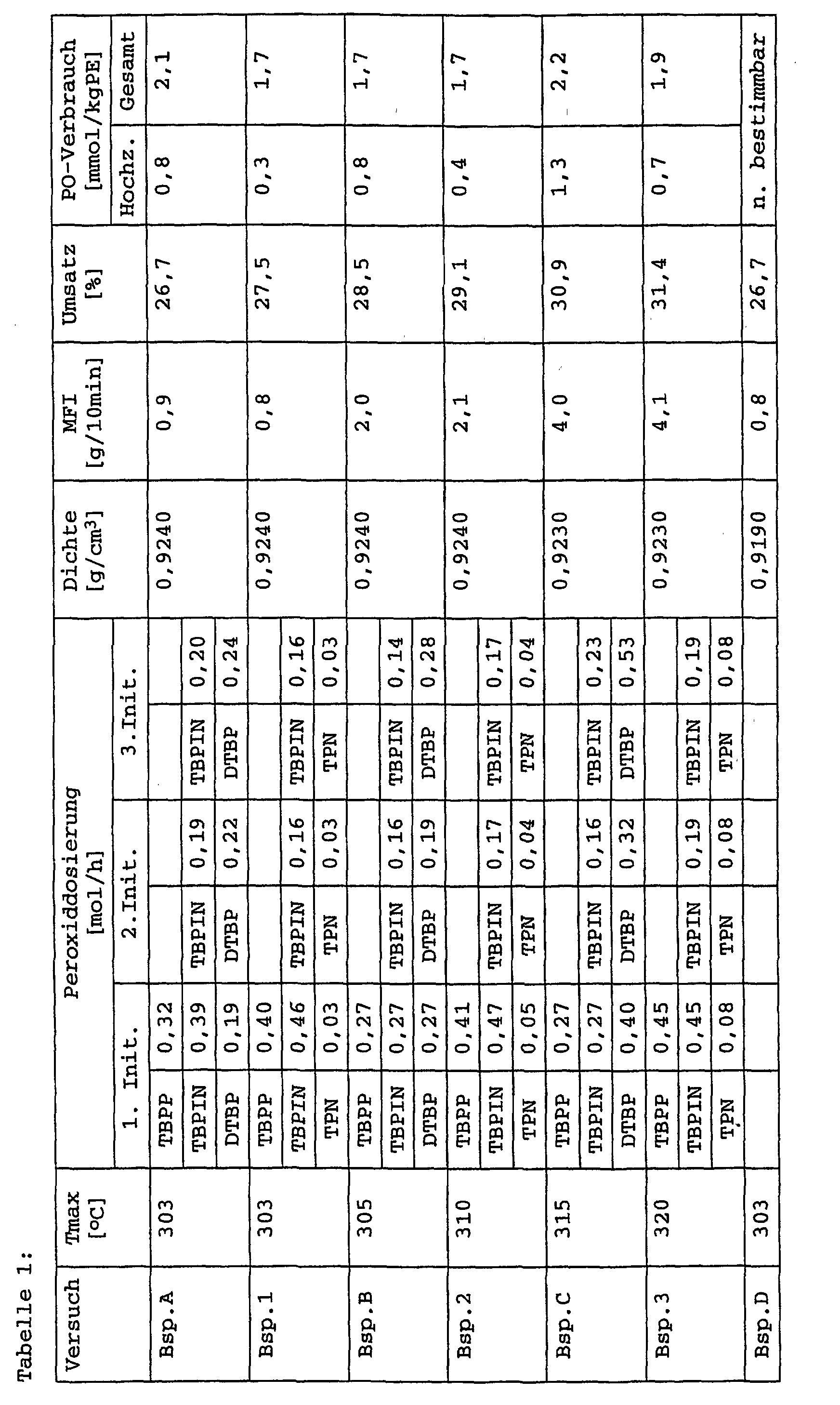

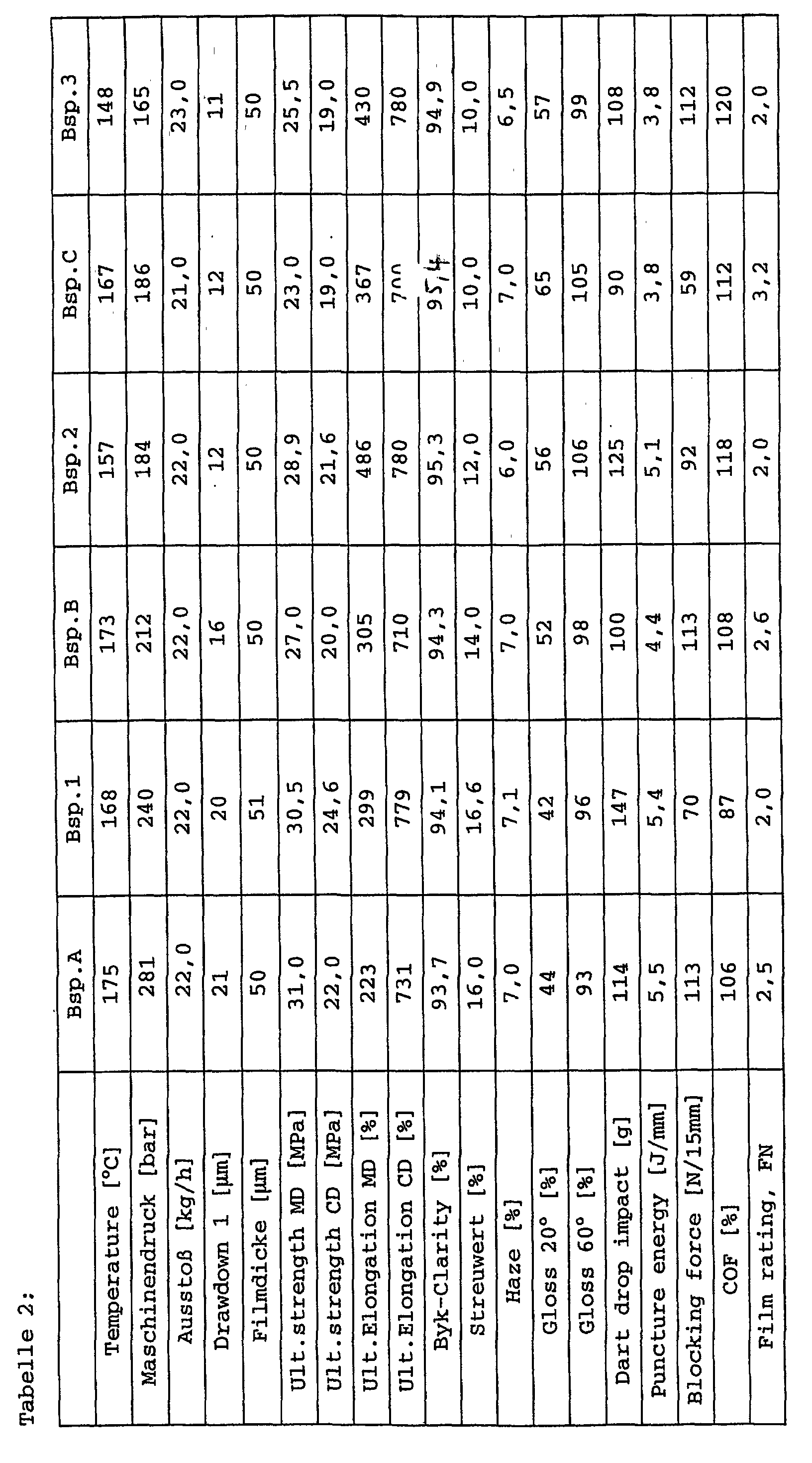

## Patentansprüche

1. Verfahren zur Herstellung von Ethylenhomopolymeren und -copolymeren in einem Rohrreaktor bei Temperaturen von 160°C bis 350°C und Drücken im Bereich von 500 bis 5000 bar, gegebenenfalls unter Verwendung von Molmassenreglern, **dadurch gekennzeichnet, dass** man als Polymerisationsinitiator ein Peroxidgemisch einsetzt, das von
A) 1 bis 50 Mol-% eines oder mehrerer trimerer Ketonperoxide der Formel I als Hochzerfaller 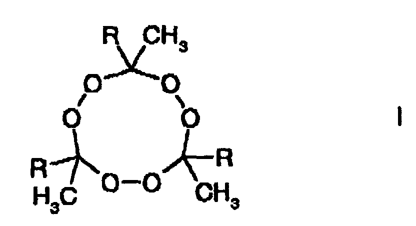 wobei die Reste R gleich oder verschieden sind und aus Alkylgruppen oder Arylgruppen ausgewählt werden, und
B) 50 bis 99 Mol-% eines oder mehrerer konventioneller Polymerisationsinitiatoren, bezogen auf die Gesamtmenge des Peroxidgemisches enthält.

2. Verfahren nach Anspruch 1, **dadurch gekennzeichnet, dass** die Reste R aus linearen C₁-C₈-Alkylgruppen ausgewählt werden.

3. Verfahren nach Anspruch 1 oder 2, **dadurch gekennzeichnet, dass** alle Reste R Ethyl bedeuten.

4. Verfahren nach den Ansprüchen 1 bis 3, **dadurch gekennzeichnet, dass** man als Polymerisationsinitiatoren Peroxidgemisch, bestehend aus
A') 1 bis 50 Mol-% eines oder mehrerer trimerer Ketonperoxide der Formel I als Hochzerfaller,
B') 20 bis 99 Mol-% eines oder mehrerer konventioneller Peroxide als Mittelzerfaller, und
C') 0 bis 79 Mol-% eines oder mehrerer konventioneller Peroxide als Niedrigzerfaller,
wobei A'), B') und C') 100% ergeben,
verwendet.

## Claims

1. A process for preparing ethylene homopolymers and copolymers in a tube reactor at from 160°C to 350°C and pressures in the range from 500 to 5000 bar, with or without use of molar mass regulators, wherein a peroxide mixture comprising
A) from 1 to 50 mol% of one or more trimeric ketone peroxides of the formula I as peroxides decomposing at high temperature 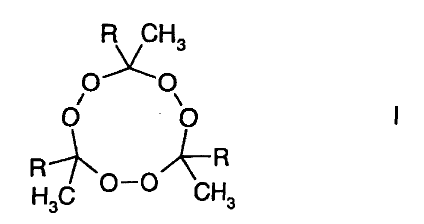 where the radicals R are identical or different and are selected from among alkyl groups and aryl groups, and
B) from 50 to 99 mol% of one or more conventional polymerization initiators, based on the total weight of the peroxide mixture,
is used as polymerization initiator.

2. A process as claimed in claim 1, wherein the radicals R are selected from among linear C₁-C₈-alkyl groups.

3. A process as claimed in claim 1 or 2, wherein all the radicals R are ethyl.

4. A process as claimed in any of claims 1 to 3, wherein the polymerization initiator used is a peroxide mixture comprising
A') from 1 to 50 mol% of one or more trimeric ketone peroxides of the formula I as peroxides decomposing at high temperature,
B') from 20 to 99 mol% of one or more conventional peroxides as peroxides decomposing at intermediate temperature, and
C') from 0 to 79 mol% of one or more conventional peroxides as peroxides decomposing at low temperature, where A'), B') and C') add up to 100%.

## Revendications

1. Procédé pour la préparation d'homopolymères et de copolymères d'éthylène dans un réacteur tubulaire à des températures de 160°C à 350°C et des pressions dans l'intervalle de 500 à 5000 bar, éventuellement avec utilisation de régulateurs de masse moléculaire, **caractérisé par le fait qu'**on utilise comme initiateur de polymérisation un mélange de peroxydes qui contient
A) 1 à 50 % en moles d'un ou plusieurs peroxydes de cétone trimères de formule I comme agent à décomposition haute 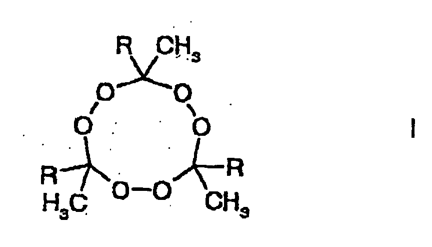 tandis que les restes R sont identiques ou différents et sont choisis parmi les groupes alkyle ou les groupes aryle, et
B) 50 à 99 % en moles d'un ou plusieurs initiateurs de polymérisation classiques, par rapport à la quantité totale du mélange de peroxydes.

2. Procédé selon la revendication 1, **caractérisé par le fait que** les restes R sont choisis parmi les groupes alkyle en C₁-C₈ linéaires.

3. Procédé selon la revendication 1 ou 2, **caractérisé par le fait que** tous les restes R désignent l'éthyle.

4. Procédé selon les revendications 1 à 3, **caractérisé par le fait qu'**on utilise comme initiateurs de polymérisation un mélange de peroxyde consistant en
A') 1 à 50 % en moles d'un ou plusieurs peroxydes de cétone trimères de formule I comme agent à décomposition haute,
B') 20 à 99 % en moles d'un ou plusieurs peroxydes classiques comme agent à décomposition moyenne, et
C') 0 à 79 % en moles d'un ou plusieurs peroxydes classiques comme agent à décomposition basse,
tandis que A'), B') et C') totalisent 100%.
